# EUROPÄISCHE PATENTSCHRIFT

(11) **EP 2 184 520 B1**
(45) Veröffentlichungstag und Bekanntmachung des Hinweises auf die Patenterteilung: **15.02.2017**
(21) Anmeldenummer: 09013326.5
(22) Anmeldetag: 22.10.2009
(51) Int. Cl.: F16K 1/36, F16K 11/044, F16K 47/02, F24D 19/10

(54) **Ventil mit einer Einrichtung gegen Wasserschlag**
Valve with a device against water hammer
Soupape dotée d'un dispositif contre les coups des bélier

(30) Priorität: 06.11.2008 DE 102008056109
(43) Veröffentlichungstag der Anmeldung: 12.05.2010
(73) Patentinhaber: WILO SE, 44263 Dortmund (DE)
(72) Erfinder: Bordier, Stephane, 18410 Argent sur Sauldre (FR); Le Strat, Olivier, 18700 Oizon (FR); Lacan, Jean-Pierre, 18700 Aubigny sur Nère (FR)
(74) Vertreter: Cohausz Hannig Borkowski Wißgott

(56) Entgegenhaltungen:
- DE-A1- 2 404 174
- GB-A- 1 104 639
- US-A- 2 713 986

## Beschreibung

Die Erfindung betrifft ein Ventil insbesondere Dreiwegeventil zum Steuern des Durchflusses einer Flüssigkeit insbesondere als Misch- oder Verteilerventil einer Heizungsanlage mit einem kolbenförmigen Ventilstellglied, das in axialer Richtung zwischen einer geschlossenen und einer geöffneten Stellung beweglich ist, um den Durchfluss zwischen einem ersten und einem zweiten Kanal zu sperren und zu öffnen, wobei in der geschlossenen Stellung das Ventilstellglied mit seiner Dichtfläche an einem Ventilsitz dichtend anliegt.

Es sind Dreiwegeventile in unterschiedlicher Bauform bekannt. Wird ein solches Ventil geschlossen, so kann es zumindest in einem der angeschlossenen Flüssigkeitskanälen zu einem Druckstoß kommen, der auch "Wasserschlag" genannt wird und Beschädigungen in den angeschlossenen Leitungen und Geräten insbesondere auch in Pumpen erzeugen kann. Um dies zu verhindern ist es bekannt, zusätzliche Einrichtungen zum Ventil anzuordnen, die konstruktions- und kostenaufwendig sind.

Aus der US 2 713 986 A sind Ventile bekannt, auf deren Ventilstellglied ein Glied gelagert ist, das die Dichtfläche bildet, das am Ventilsitz zur Anlage gelangt. Das Glied bildet ein seitlich bewegliches Teil, das sich selbsttätig gegenüber dem Ventilsitz ausrichtet, um eine hohe Dichtsicherheit zu erreichen.

Aufgabe der Erfindung ist es, ein Ventil der eingangs genannten Art so zu verbessern, dass es bei einfacher und sicher arbeitender Konstruktion Vibrationen und insbesondere Wasserschläge verhindert.

Diese Aufgabe wird erfindungsgemäß dadurch gelöst, dass das Ventilstellglied einen insbesondere inneren Durchlass aufweist, der bei geschlossenem Ventilstellglied die beiden Kanäle verbindet, wenn der Druck im Eingangskanal einen bestimmten Wert übersteigt, dass im oder am Ventilstellglied ein Stellglied gelagert ist, das den Durchlass öffnet und schließt, dass das Stellglied die Dichtfläche des Ventilstellglieds bildet.

Damit bildet der im Ventilstellglied angeordnete Durchlass als Bypass kurzzeitig einen Druckausgleich zwischen dem Eingangs- und Ausgangskanal während und kurz nach dem Schließen des Ventils. Eine solche Konstruktion sorgt dafür, dass ein Schließen des Ventils zu keinen erheblichen Druckschwankungen und insbesondere zu keinem Wasserschlag in den angeschlossenen Kanälen und Geräten führt. Hierbei wird bei einfacher Konstruktion und geringen Außenabmessungen eine hohe Funktionssicherheit erreicht. Auch ist ein solches Ventil besonders vorteilhaft im Anschluss/Verbindung mit einer Pumpe einsetzbar.

Eine besonders einfache und funktionssichere Konstruktion wird erzielt, wenn das Stellglied ein koaxial außen am Ventilstellglied gelagerter Dichtring ist, der axial begrenzt beweglich ist. Auch wird vorteilhafterweise vorgeschlagen, dass hierbei die Seitenfläche des Stellgliedes die Dichtfläche bilden.

Besonders vorteilhaft ist es, wenn die dem Ventilsitz abgekehrte Rückseite des Stellgliedes mit einer Fläche des Ventilstellgliedes einen Abschnitt des Durchlasses bildet, der bei Anlage der Rückseite des Stellgliedes am Ventilstellglied geschlossen ist. Eine einfache und sichere Konstruktion bei geringen Abmessungen des Ventils insbesondere des Ventilstellgliedes wird erreicht, wenn der Anfangsbereich des Durchlasses von mindestens einer Öffnung insbesondere einem Fenster in dem Bereich des Ventilstellglieds gebildet ist, der dem ersten Kanal zugewandt ist, in dem der Flüssigkeitsdruck anliegt. Vorzugsweise wird vorgeschlagen, dass es mit dem Einlass und/oder Auslass einer Pumpe verbunden ist.

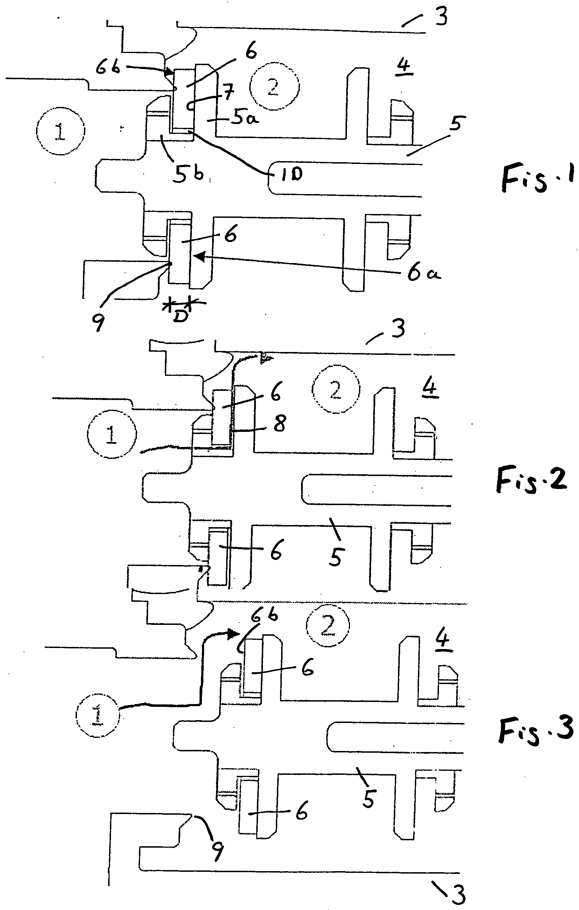

Ein Ausführungsbeispiel der Erfindung ist in den Zeichnungen in axialen Schnitten dargestellt und wird im Folgenden näher beschrieben. Es zeigen
- Fig. 1: das Ventil in geschlossenem Zustand bei geschlossenem Durchlass des Ventilstellgliedes,
- Fig. 2: das Ventil in geschlossenem Zustand bei geöffnetem Durchlass und
- Fig. 3: das Ventil in geöffnetem Zustand.

Ein Dreiwegeventil ist zwischen einem druckführenden Eingangskanal 1 und einem Ausgangskanal 2 angeordnet und weist ein Ventilgehäuse 3 auf, das eine zylindrische Ventilkammer 4 aufweist, in der ein kolbenförmiges Ventilstellglied 5 koaxial beweglich gelagert ist. Das Ventilstellglied 5 trägt koaxial ein ringförmiges Stellglied 6, das in einer koaxialen Ringnut 7 einliegt, wobei die Ringnut etwas breiter ausgeführt ist als die Dicke D des ringförmigen Stellglieds 6, so dass das Stellglied in koaxialer Richtung begrenzt beweglich ist. Hierbei liegt das Stellglied 6 im Normalzustand mit seiner Rückseite 6a an einem ringförmigen, am Ventilstellglied 5 angeformten, koaxialen Ringteil 5a an.

Das Ventilstellglied 5 bildet innerhalb seines dem Eingangskanal zugewandten Bereich einen Durchlass 8, der die Kanäle 1 und 2 miteinander verbindet, wenn das Stellglied 6 vom Ringteil 5a abgehoben ist, so dass die durch den Durchlass strömende Flüssigkeit zwischen der Rückseite 6a des Stellglieds 6 und der Vorderseite des Ringteils 5a strömt. Liegt dagegen das Stellglied 6 am Ringteil 5a an, so ist der Durchlass 8 geschlossen.

Die dem Eingangskanal 1 zugewandte Fläche des Stellglieds 6 bildet eine Dichtfläche 6b, die bei geschlossenem Ventilstellglied am Ventilsitz 9 des Dreiwegeventils anliegt. Damit wird das Stellglied 6 durch den Ventilsitz 9 gegen das Ringteil 5a gedrückt, wenn das Ventilstellglied 5 sich in der geschlossenen Stellung befindet. Wird aber das Ventilstellglied 5 verhältnismäßig schnell geschlossen, so kann im Eingangskanal 1 sich ein erheblicher Druck aufbauen, der zu einem Druckstoß (Wasserschlag, Druckschlag) führen kann. Aufgrund des Durchlasses 8 innerhalb des Ventilstellglieds 5 bildet der Durchlass 8 kurzzeitig eine Verbindung zwischen dem Eingangskanal 1 und dem Ausgangskanal 2, so dass es zu einem Druckausgleich kommt und damit ein im Eingangskanal und/oder Ausgangskanal entstehender Druck sicher abgebaut wird.

Um eine Verbindung zwischen dem Eingangskanal 1 und dem Durchlass 8 zu bilden, sind in dem dem Eingangskanal 1 zugewandten Bereich 5b des Ventilstellglieds Fenster 12 angeordnet, die zu dem Raum 10 führen, in dem das Stellglied 6 gelagert ist und der ein Teil des Durchlasses 8 bildet. Besonders vorteilhaft ist ein solches Ventil als Misch- oder Verteilerventil einer Heizungsanlage zu verwenden.

In einer nicht dargestellten Ausführung weist das Ventilstellglied 5 ein Federelement auf, das das Stellglied 6 in Öffnungsrichtung belastet, d. h. in einer Richtung, in der das Stellglied 6 vom Ringteil 5a abhebt und damit den Durchlass 8 öffnet.

## Patentansprüche

1. Ventil insbesondere Dreiwegeventil zum Steuern des Durchflusses einer Flüssigkeit insbesondere als Misch- oder Verteilerventil einer Heizungsanlage mit einem kolbenförmigen Ventilstellglied (5), das in axialer Richtung zwischen einer geschlossenen und einer geöffneten Stellung beweglich ist, um den Durchfluss zwischen einem ersten und einem zweiten Kanal (1, 2) zu sperren und zu öffnen, wobei in der geschlossenen Stellung das Ventilstellglied (5) mit seiner Dichtfläche (6b) an einem Ventilsitz (9) dichtend anliegt,**dadurch gekennzeichnet,**
- **dass** das Ventilstellglied (5) einen inneren Durchlass (8) aufweist, der bei geschlossenem Ventilstellglied (5) die beiden Kanäle (1, 2) verbindet, wenn der Druck im Eingangskanal (1) einen bestimmten Wert übersteigt,
- **dass** im oder am Ventilstellglied (5) ein Stellglied (6) gelagert ist, das den Durchlass (8) öffnet und schließt,
- **dass** das Stellglied (6) die Dichtfläche (6b) des Ventilstellglieds (5) bildet.

2. Ventil nach Anspruch **1,dadurch gekennzeichnet, dass** das Stellglied (6) ein koaxial außen am Ventilstellglied (5) gelagerter Dichtring ist, der axial begrenzt beweglich ist.

3. Ventil nach Anspruch 1 oder 2, **dadurch gekennzeichnet, dass** die Seitenfläche des Stellgliedes (6) die Dichtfläche (6b) bildet.

4. Ventil nach einem der vorherigen Ansprüche, **dadurch gekennzeichnet, dass** die dem Ventilsitz (9) abgekehrte Rückseite (6a) des Stellgliedes (6) mit einer Fläche (7) des Ventilstellgliedes (5) einen Abschnitt des Durchlasses (8) bildet, der bei Anlage der Rückseite (6a) des Stellgliedes (6) am Ventilstellglied (5) geschlossen ist.

5. Ventil nach einem der vorherigen Ansprüche, **dadurch gekennzeichnet, dass** der Anfangsbereich des Durchlasses (8) von mindestens einer Öffnung insbesondere einem Fenster (11) in dem Bereich (5b) des Ventilstellglieds (5) gebildet ist, der dem ersten Kanal (1) zugewandt ist, in dem der Flüssigkeitsdruck anliegt.

6. Ventil nach einem der vorherigen Ansprüche, **dadurch gekennzeichnet, dass** es mit dem Einlass und/oder Auslass einer Pumpe verbunden ist.

## Claims

1. Valve, in particular a three-way valve, for controlling the through-flow of a liquid, in particular as a mixing or distribution valve of a heating system, comprising a piston-shaped valve actuator (5) which is movable in the axial direction between a closed and an open position in order to block and to open the through-flow between a first and a second channel (1, 2), wherein, in the closed position, the valve actuator (5) bears sealingly by its sealing face (6b) against a valve seat (9), **characterized**
- **in that** the valve actuator (5) has an inner through-passage (8) which, with the valve actuator (5) closed, connects the two channels (1, 2) if the pressure in the inlet channel (1) exceeds a certain value,
- **in that** an actuator (6) which opens and closes the through-passage (8) is mounted in the or on the valve actuator (5),
- **in that** the actuator (6) forms the sealing face (6b) of the valve actuator (5).

2. Valve according to Claim 1, **characterized in that** the actuator (6) is a sealing ring which is mounted coaxially on the outside of the valve actuator (5) and which is movable axially to a limited extent.

3. Valve according to Claim 1 or 2, **characterized in that** the lateral face of the actuator (6) forms the sealing face (6b).

4. Valve according to one of the preceding claims, **characterized in that** the rear side (6a) of the actuator (6) that faces away from the valve seat (9) forms, together with a face (7) of the valve actuator (5), a portion of the through-passage (8) that is closed when the rear side (6a) of the actuator (6) bears against the valve actuator (5).

5. Valve according to one of the preceding claims, **characterized in that** the starting region of the through-passage (8) is formed by at least one opening, in particular a window (11), in the region (5b) of the valve actuator (5) that faces the first channel (1) in which the liquid pressure prevails.

6. Valve according to one of the preceding claims, **characterized in that** it is connected to the inlet and/or outlet of a pump.

## Revendications

1. Soupape, en particulier soupape à trois voies, pour commander le débit d'un liquide, en particulier sous la forme d'une soupape mélangeuse ou de distribution d'une installation de chauffage, comprenant un organe de commande de soupape en forme de piston (5) qui peut être déplacé dans la direction axiale entre une position fermée et une position ouverte afin de bloquer et de libérer l'écoulement entre un premier et un deuxième canal (1, 2), l'organe de commande de soupape (5) s'appliquant hermétiquement avec sa surface d'étanchéité (6b) contre un siège de soupape (9) dans la position fermée,
**caractérisée en ce que**
- l'organe de commande de soupape (5) présente un passage interne (8) qui, lorsque l'organe de commande de soupape (5) est fermé, relie les deux canaux (1, 2), si la pression dans le canal d'entrée (1) dépasse une valeur déterminée,
- un organe de commande (6) est supporté dans ou sur l'organe de commande de soupape (5), lequel ouvre et ferme le passage (8),
- l'organe de commande (6) forme la surface d'étanchéité (6b) de l'organe de commande de soupape (5).

2. Soupape selon la revendication 1, **caractérisée en ce que** l'organe de commande (6) est une bague d'étanchéité supportée coaxialement à l'extérieur sur l'organe de commande de soupape (5), qui peut être déplacée axialement de manière limitée.

3. Soupape selon la revendication 1 ou 2, **caractérisée en ce que** la surface latérale de l'organe de commande (6) forme la surface d'étanchéité (6b).

4. Soupape selon l'une quelconque des revendications précédentes, **caractérisée en ce que** le côté arrière (6a) de l'organe de commande (6) opposé au siège de soupape (9) forme avec une surface (7) de l'organe de commande de soupape (5) une portion du passage (8) qui est fermée lors de l'application du côté arrière (6a) de l'organe de commande (6) contre l'organe de commande de soupape (5).

5. Soupape selon l'une quelconque des revendications précédentes, **caractérisée en ce que** la région de départ du canal (8) est formée par au moins une ouverture, en particulier une fenêtre (11), dans la région (5b) de l'organe de commande de soupape (5), qui est tournée vers le premier canal (1) dans lequel s'applique la pression de fluide.

6. Soupape selon l'une quelconque des revendications précédentes, **caractérisée en ce qu'**elle est connectée à l'entrée et/ou à la sortie d'une pompe.
